# EUROPEAN PATENT SPECIFICATION

(11) **EP 3 178 712 B1**
(45) Date of publication and mention of the grant of the patent: **14.04.2021**
(21) Application number: 16202712.2
(22) Date of filing: 07.12.2016
(51) Int. Cl.: B60T 7/04, B60T 13/66, B60T 13/68

(54) **BRAKE-BY-WIRE BRAKING SYSTEM FOR VEHICLES PROVIDED WITH HYDRAULIC SIMULATOR AND ACTUATING METHOD THEREOF**
BRAKE-BY-WIRE-BREMSSYSTEM FÜR FAHRZEUGE MIT HYDRAULISCHEM SIMULATOR UND BETÄTIGUNGSSVERFAHREN
SYSTÈME DE FREINAGE DE TYPE « FREINAGE ÉLECTRONIQUE » POUR VÉHICULES POURVU DE SIMULATEUR HYDRAULIQUE ET PROCÉDÉ D'ACTIONNEMENT

(30) Priority: 09.12.2015 IT UB20156814
(43) Date of publication of application: 14.06.2017
(73) Proprietor: Freni Brembo S.p.A., 24035 Curno (Bergamo) (IT)
(72) Inventor: ALEMANNO, Fabio, I-24035 Curno, BERGAMO (IT); DOZZI, Francesco, I-24035 Curno, BERGAMO (IT); UGOLINI, Luca, I-24035 Curno, BERGAMO (IT); FORNI, Fabrizio, I-24035 Curno, BERGAMO (IT); PAGANI, Luca, I-24035 Curno, BERGAMO (IT); SZEWCZYK, Beniamin, I-24035 Curno, BERGAMO (IT); GALIZZI, Valerio, I-24035 Curno, BERGAMO (IT)
(74) Representative: Mitola, Marco

(56) References cited:
- EP-A1- 1 864 875
- EP-A1- 2 871 102
- DE-A1- 3 409 705
- DE-A1-102013 204 778
- DE-A1-102013 222 281
- GB-A- 2 449 984

## Description

### FIELD OF APPLICATION

This invention regards a brake-by-wire braking system for vehicles equipped with a hydraulic feedback simulator, and a related method of actuating a vehicle braking system.

### STATE OF THE ART

In particular, this invention relates to the field of pedal simulators for "by wire" braking systems for cars. In general, this invention also relates to manual simulators of any type, hence also with lever, for "by wire" braking systems of vehicles in general, therefore also including motor vehicles, heavy vehicles and the like.

In "by-wire" systems there is generally a decoupling between the force and displacement imparted to the pedal or lever by the user and the pressure/force actually applied in the callipers or other braking devices connected to the vehicle wheels.

A simulator of manual actuation devices, be they pedals or levers, can be achieved with the use of different technologies all comprising means for electrical actuation of the independent braking devices by the operator's manual actuation. Such electric actuation means typically comprise electric motors that actuate the braking devices as a function of the braking request made by the user by means of the manual actuation devices. Therefore, in normal operating conditions, there is never a direct connection between the manual actuation device and the braking devices; obviously, simulators are provided that return a resistance to the user equivalent to that of a traditional braking system.

Typically the simulator is composed of a master cylinder, i.e., a main pump connected to the manual actuation device (pedal or lever) through a main branch, and a sorbing device that returns a response to the user equivalent to that normally generated by a braking device in a conventional braking system. As seen, the true braking action is instead performed by the electric actuation means that actuate the braking devices directly as a function of the braking force requested by the user.

Furthermore, the known braking systems provide a secondary or back-up branch that serves to directly connect the master cylinder to the braking devices in case of malfunction or power failure of the electric actuation means. This back-up branch is evidently a safety that, even in case of malfunction of the electrical devices, allows to actuate operate the braking devices as occurs in a conventional hydraulic system.

The main and secondary branches are typically managed by suitable valves; in particular, a first normally-open valve is used to isolate the master cylinder from the back-up branch and to connect the hydraulic sorbing device with the master cylinder: in this way, the necessary feedback (pedal or lever force - pedal or lever travel) is provided to the driver.

A second normally-closed valve is also provided on the connection branch between the master cylinder and sorbing device. This second valve is, instead, open in case of malfunction or power failure: thanks to this second valve, the master cylinder is directly connected to the braking devices so as to allow their direct actuation by the user.

The known solutions are certainly safe but do not allow returning to the user a feeling of the actual actuation of the braking devices and, especially, in case of braking correction due, for example to the locking one or more wheels of the vehicle, do not return to the user the feeling of the actual occurrence of the dynamic instability of the vehicle and the due to correction by the system.

In other words, in brake-by-wire systems of the known type, the user is not aware of the braking correction intervention performed by the controller of the system both to avoid the locking of one or more wheels and to correct for example an erroneous trajectory and/or an excessive braking as a function of such trajectory.

The fact that the user is not aware, at the pedal or lever, of the correction intervention due to a dynamic instability of the vehicle is dangerous because the user, unaware of this instability, does not change his driving style accordingly. It is clear that braking correction systems, whether merely anti-locking and/or trajectory correcting by braking one or more wheels, are able to correct driver errors within certain limits; if the driver is not aware that his driving style is putting the vehicle in stability limit conditions in relation to the path followed, the situation may become dangerous.

In fact, there may be driving conditions that are uncorrectable by the braking system and therefore there can occur dangerous and sudden losses of control of the vehicle, without the driver having any warning of such events.

### PRESENTATION OF THE INVENTION

To date, no specific solutions have been adopted in the art to solve the above problems.

In fact, the known brake-by-wire systems provide solutions aimed at improving the passive safety of the system by ensuring braking in the event of electrical malfunction, or even solutions aimed at faithfully reproducing the travel/resistance law at the pedal or lever of a conventional hydraulic system. In any case, the known systems are always designed so as to avoid any feedback to the pedal or lever of possible braking correction interventions by the system. It is also known from DE 10 2013 204778 to provide solutions which give a feedback to the user through hydraulic means; these solutions are not optimised.

Therefore, there is an increasingly felt need to solve the above drawbacks and limitations of the prior art. In other words, the need is felt to provide a by-wire braking system that is able to warn the user of correction interventions performed by the system on the user's braking request, i.e., a system that is able to warn to the user of vehicle instability phenomena due to his driving style in relation to ground conditions.

This need is met by a braking system for vehicles according to claim 1 and by a method for the actuation of a braking system for vehicles according to claim 11.

In particular, this need is met by a braking system for vehicles comprising

- a pilot pump equipped with a manual actuation means, a lever and/or pedal, which is fluidically connected, through a first hydraulic conduit, to a sorbing device that simulates the actuation resistance offered by a hydraulically operated braking device, wherein along said first hydraulic conduit is arranged a first shut-off valve,

- a second hydraulic conduit operatively connected to at least one braking device associated with a wheel of said vehicle, said second hydraulic conduit being connected to the first hydraulic conduit through a second shut-off valve,

- the system comprising a processing and control unit operatively connected to the pilot pump and motor means for actuating said at least one braking device, the processing and control unit being programmed so as to actuate the braking device via the motor means as a function of the actuation of the pilot pump through the manual actuation means, in a "by-wire" operating condition,

- in said "by-wire" operating condition, the first shut-off valve being selectively opened and the second shut-off valve being closed,

### characterised in that

the processing and control unit is programmed to oversee the operation of the braking system so as to correct the braking action requested by the user via the manual actuation means, by actuating the motors means so as to avoid the locking of one or more wheels or the onset of instability of the vehicle during braking,

said processing and control unit being programmed to induce on the manual actuation means at least a vibration when it corrects the braking action requested by the user,

wherein the system comprises movable mechanical means arranged between the manual actuation means and the pilot pump, said movable mechanical means being operatively connected to the processing and control unit that is programmed so as to induce vibrations on the manual actuation means by actuating the movable mechanical means, during the correction of the braking action requested by the user.

According to an embodiment, the movable mechanical means comprise a rotary electric motor provided with eccentric mass with respect to a rotation axis of the motor.

According to an embodiment, the movable mechanical means comprise an electric motor provided a related translating mass.

According to an embodiment, the movable mechanical means are vibrating mechanical means that comprise a piezoelectric device.

According to an embodiment, said piezoelectric device is associated to a relative mass.

According to an embodiment, during the correction of the braking action requested by the user, the processing and control unit is programmed to close the first shut-off valve and to actuate the movable mechanical means.

According to an embodiment, during the correction of the braking action requested by the user, the processing and control unit is programmed to open the first shut-off valve and to actuate the movable mechanical means.

According to an embodiment, during the correction of the braking action requested by the user, the processing and control unit is programmed to alternatively open and close the first shut-off valve and to actuate the movable mechanical means.

According to an embodiment, the braking devices comprise disc, drum or shoe brakes.

According to an embodiment, the processing and control unit is programmed so that, in a power failure condition in which the motor means malfunction, for the actuation of said at least one braking device, it commands the closing of the first shut-off valve and the opening the second shut-off valve so as to allow the direct hydraulic actuation of the braking devices by means of the pilot pump.

This invention also relates to a method of actuating a braking system for vehicles comprising the steps of:

- providing a pilot pump equipped with a manual actuation means, a lever and/or pedal, which is fluidically connected, through a first hydraulic conduit, to a sorbing device that simulates the actuation resistance offered by a hydraulically operated braking device, wherein along said first hydraulic conduit is arranged a first shut-off valve,

- providing a second hydraulic conduit operatively connected to at least one braking device associated with a wheel of said vehicle, said second hydraulic conduit being connected to the first hydraulic conduit through a second shut-off valve,

- providing a processing and control unit operatively connected to the pilot pump and to motor means for actuating said at least one braking device as a function of the actuation of the pilot pump through the manual actuation means, in a "by-wire" operating condition, in said "by-wire" operating condition the first shut-off valve being selectively open and the second shut-off valve being closed,

- correcting the braking action requested by the user via the manual actuation means, by means of the processing and control unit which actuates the motor means so as to avoid locking of one or more wheels or the onset of instability of the vehicle during braking,

- inducing on the manual actuation means at least a vibration when the processing and control unit corrects the braking action requested by the user.

### DESCRIPTION OF THE DRAWINGS

Further characteristics and advantages of this invention will be more understandable from the following description of its preferred and non-limiting examples of embodiments, in which:

Figure 1 is a schematic view of a braking system for vehicles according to a first embodiment of this invention;

Figure 2 is a schematic view of a braking system for vehicles according to a second embodiment of this invention;

Figures 3 and 4 are schematic views of a braking system for vehicles according to a third and fourth embodiment of this invention.

The elements, or parts of elements, in common between the embodiments described below will be indicated with the same reference numbers.

### DETAILED DESCRIPTION

With reference to the above figures, the reference number 4 globally indicates a braking system for vehicles.

For the purposes of this invention, "vehicles" means both cars and motorcycles.

The braking system 4 for vehicles comprises a pilot pump 8 provided with a manual actuation means 12, lever and/or pedal.

Typically the pilot pump 8 comprises a float that is put in motion by the mechanical action of the user on the manual actuation means 12, whether lever or pedal. The float 9 has the function of pressurising a brake fluid in a known manner. The brake fluid is in turn contained in a tank 10 fluidically connected to the pilot pump 8, in a known manner.

The pilot pump 8 is fluidically connected, through a first hydraulic conduit 16 containing brake fluid in a known manner, to a sorbing device 20 that simulates the actuation resistance offered by a hydraulically operated braking device 24.

The sorbing device 20 serves to provide resistance to the actuation of the manual actuation means 12 so as to simulate the normal resistance that a user would have on the manual actuation means 12 following braking action with the braking device 24. The sorbing device 20 is typically a mechanical device equipped with springs and similar devices for simulating the resistance provided by normal devices.

For the purposes of this invention, the braking device 24 can be of various type, comprising for example a disc, drum or shoe brake.

This invention also applies to braking systems 4 comprising electromechanically operated braking devices 24. Therefore, for the purposes of the scope of protection, the invention also covers braking system 4 solutions comprising said electromechanically operated braking devices 24.

Along said first hydraulic conduit 16 is arranged a first shut-off valve 28.

The first shut-off valve 28 can be opened and closed: in the open configuration, it allows the fluid connection between the pilot pump 8 and the sorbing device 20; in the closed configuration said first shut-off valve 28 disconnects the sorbing device 20 from the pilot pump 8.

The braking system 4 also comprises a second hydraulic conduit 32 operatively connected to at least one braking device 24 associated to a wheel of said vehicle.

The second hydraulic conduit 32 is connected to the first hydraulic conduit 16 through a second shut-off valve 36.

The second shut-off valve 36 can, in turn, be opened and closed; in open conditions, the second shut-off valve 36 allows the fluid connection between the pilot pump 8 and the braking device 24; in this way the user can directly actuate the braking device 24 with a conventional hydraulic actuation by acting on the related manual actuation means 12. In closed condition, the second shut-off valve 36 does not allow the direct fluid connection between the pilot pump 8 and the braking device 24. The user can therefore not directly actuate the braking device 24 by using the manual actuation means 12.

The braking system 4 comprises a processing and control unit 40 operatively connected to the pilot pump 8, and motor means 44 for the actuation of said at least one braking device 24.

The motor means 44 are preferably electric motors able to operate, directly or through interposed kinematic mechanisms, said braking devices 24.

The processing and control unit 40 is advantageously programmed so as to actuate at least one braking device 24 via the motor means 44 as a function of the actuation of the pilot pump 8 through the manual actuation means 12, in a "by-wire" operating condition.

In particular, in said "by-wire" operating condition, the first shut-off valve 28 is selectively open and the second shut-off valve 36 is closed. "Selectively" means that, in this by-wire operating condition, the first shut-off valve 28 can be open or closed, based on the operating conditions established by the processing and control unit 40, as better described below.

Advantageously, the processing and control unit 40 is programmed to oversee the operation of the braking system 4 so as to correct the braking action requested by the user via the manual actuation means 12, by actuating the motors means 44 so as to avoid the locking of one or more wheels or the onset of instability of the vehicle during braking.

In other words, the processing and control unit 40 oversees the operation of the braking system 4 with both anti-lock function (ABS) of one or more wheels during a braking action and with the vehicle stability control function, during a braking action.

Moreover, the processing and control unit 40 is programmed to induce on the manual actuation means 12 at least a vibration when it corrects the braking action requested by the user.

In other words, in the case in which the processing and control unit 40 must intervene to correct the braking action requested by the user via the manual actuation means 12, the same processing and control unit 40 induces on the manual actuation means 12 at least a vibration so as to clearly warn the user that an action of instability of the vehicle is occurring due to an excess of braking action in relation to the dynamic conditions of the vehicle and adherence with the ground.

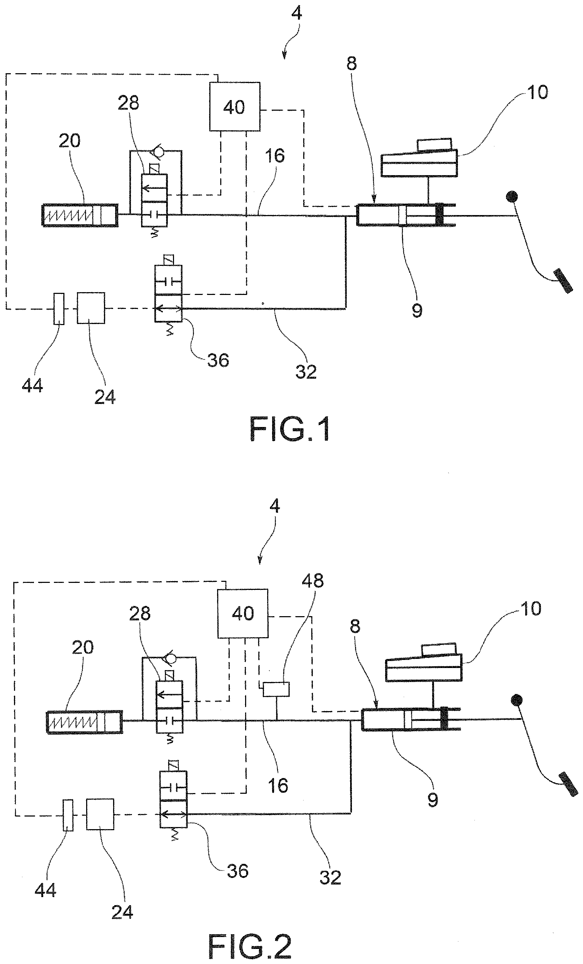

According to a possible embodiment (Figure 1), the processing and control unit 40 is programmed so that, during the correction of the braking action requested by the user, it alternately opens and closes the first shut-off valve 28 so as to create a pressure variation on the manual actuation means 12. In this condition, the second shut-off valve 36 is in closed condition and therefore does not allow the hydraulic connection between the pilot pump 8 and the braking device 24.

In particular, the processing and control unit 40 commands the closing of the first shut-off valve 28: this operation is followed by the generation of a pressure difference in the hydraulic circuit, and in particular in the first hydraulic conduit 16 between upstream and downstream of the first shut-off valve 28, as a result of the pressing of the manual actuation means 12 (either lever or pedal) by the driver. In this way, from the repeated opening and closing the first shut-off valve 28, commanded by the processing and control unit 40, derives the passage of brake fluid in the sorbing device 20 in reduced time intervals. This condition induces a desired vibrational state to the manual actuation means 12, in order to provide feedback to the driver of the vehicle similar to what would occur in the same situation in a vehicle with conventional hydraulic braking system.

According to a further embodiment (Figure 2), the braking system 4 comprises means for varying the pressure 48 in the first hydraulic conduit 16 operatively connected to the processing and control unit 40 so as to change the pressure in said first hydraulic conduit 16 to induce at least a vibration on the manual actuation means 12, during the correction of the braking action requested by the user.

In this condition, the second shut-off valve 36 is in closed condition and therefore does not allow the hydraulic connection between the pilot pump 8 and the braking device 24.

For example, said means for varying the pressure 48 in the first hydraulic conduit 16 comprise an axial or radial piston pump fluidically connected with said first hydraulic conduit 16. This axial or radial piston pump is able to create a cyclic variation of the pressure in the first hydraulic conduit 16 noticeable on the manual actuation means 12 in the form of vibrations.

According to a further embodiment, said means of varying the pressure 48 in the first hydraulic conduit 16 comprise a cam-piston system, in which the piston is fluidically connected with said first hydraulic conduit 16 so as to induce a cyclic variation of the pressure in the first hydraulic conduit 16 noticeable on the manual actuation means 12 in the form of vibrations.

Obviously, in the embodiments with means of varying the pressure 48, said means of varying the pressure 48 will have to generate a hydraulic pressure capable of overcoming the load at the manual actuation means 12 imposed by the driver.

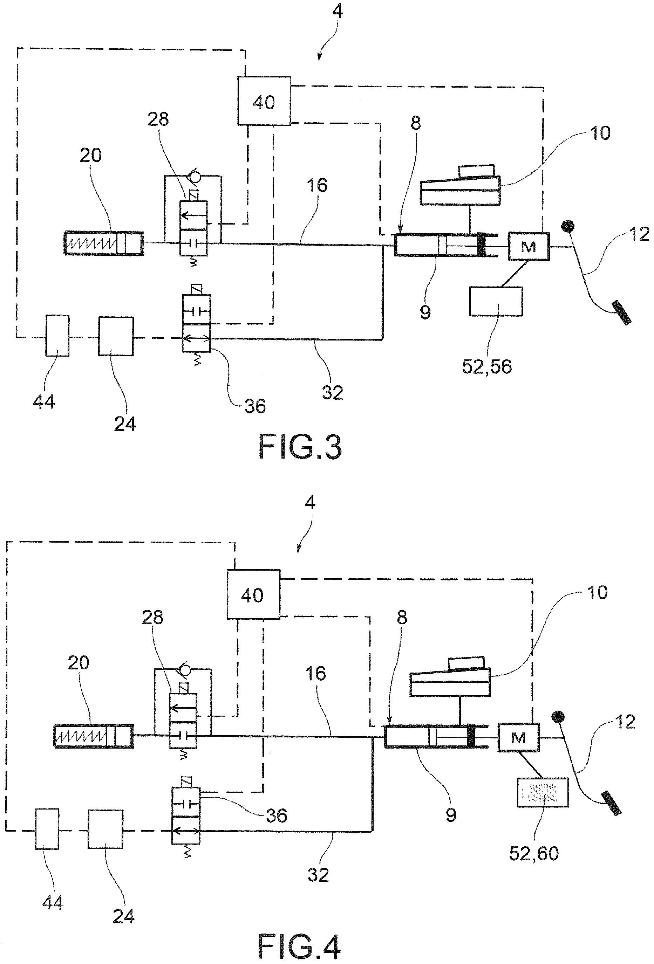

According to a further embodiment (Figures 3 to 4), the braking system 4 comprises movable mechanical means 52, arranged between the manual actuation means 12 and the pilot pump 8, wherein said movable mechanical means 52 are operatively connected to the processing and control unit 40 that is programmed so as to induce vibrations on the manual actuation means 12 by actuating the movable mechanical means 52, during the correction of the braking action requested by the user.

For example, the movable mechanical means 52 comprise a rotary electric motor 56 with eccentric mass with respect to a rotation axis of the motor.

It is also possible to provide that the movable mechanical means 52 comprise an electric motor with related translating mass 60. This translating mass 60 will move with a reciprocating rectilinear motion so as to induce the desired vibrations.

According to a further possible embodiment, the movable mechanical means 52 are vibrating mechanical means that comprise, for example, a piezoelectric device disposed singly or associated to a relative mass.

Therefore, the movable mechanical means 52 can provide macroscopic movements, as in the case of using a rotary electric motor with eccentric mass 56 or translating mass 60, and can also provide microscopic movements, as in the case of use of a piezoelectric device.

The various types of movable mechanical means 52 described above, are not necessarily alternatives to each other, but they can also be combined with each other, i.e., they can coexist in the same system.

According to an embodiment, during the correction of the braking action requested by the user, the processing and control unit 40 is programmed to close the first shut-off valve 28 and to actuate the movable mechanical means 52. In this way the pressure variations in the first conduit are obtained exclusively by means of the movable mechanical means 52.

It is also possible that, during the correction of the braking action requested by the user, the processing and control unit 40 is programmed to open the first shut-off valve 28 and to actuate the movable mechanical means 52. This open condition of the first shut-off valve 28, and activation of the movable mechanical means 52, achieves, first of all, the return of vibrational feedback to the driver. In addition, in the correction state for anti-lock function ABS and/or ESP, the manual actuation means 12, whether pedal or lever, progressively "sinks", reducing the useful travel of the manual actuation means themselves.

According to a further possible embodiment, during the correction of the braking action requested by the user, the processing and control unit 40 is programmed to alternately open and close the first shut-off valve 36 and to actuate the movable mechanical means 52.

This alternating opening/closing condition of the first shut-off valve 28, and activation of the movable mechanical means 52, achieves, returns a vibrational feedback to the manual actuation means 12.

In the state of correction for anti-lock function ABS and/or ESP, the manual actuation means 12, whether lever or pedal, are blocked at the reduced travel imposed by the user in the moment in which the braking correction is actuated for ABS and/or ESP.

At the end of the correction state for ABS and/or ESP, the travel of the manual actuation means 12 is guaranteed for the normal use of the braking system 4.

The processing and control unit 40 is programmed so that, in a power failure condition in which the motor means 44 malfunction, for the actuation of said at least one braking device 24, it commands the closing of the first shut-off valve 28 and the opening the second shut-off valve 36 so as to allow the direct hydraulic actuation of the braking devices 24 by means of the pilot pump 8.

As can be appreciated from the description, the braking system for vehicles according to the invention allows overcoming the drawbacks presented in the prior art.

In particular, the system according to the proposed invention allows returning to the driver a feeling at the pedal or lever of the dynamic state of the vehicle, when they are in the anti-locking function (ABS) or stability control in braking (DSC), or in a situation at the limit of road grip.

The advantage of such a solution is to provide the driver a feeling at the pedal or lever similar to that returned by a conventional hydraulic braking system equipped with ABS and/or DSC (Dynamic Stability Control), so as to signal to the driver a state of potential danger to driving and unfaithful response of the vehicle to the commands of the driver.

Advantageously, the system according to this invention is able to warn the driver of its braking correction intervention: in this way, the driver receives feedback through the manual actuation means, whether lever or pedal, and can for example take notice of the incorrectness of his manner of driving modes and modify it accordingly. As seen, this feedback consists of a reaction to manual control that not only opposes the intensification of the braking action but also tends to reduce it by returning the manual control to a position of lesser braking request.

The system also acts promptly and in a repeatable and reliable manner.

The braking system of this invention has a relatively low cost and adds very limited, and therefore acceptable weight to the vehicle compared to the conventional brake-by-wire solutions of the prior art.

A person skilled in the art, in order to satisfy contingent and specific needs, may make numerous modifications and variations to the braking systems and actuation methods of braking systems for vehicles described above, all however contained within the scope of the invention as defined by the following claims.

## Claims

1. Braking system for vehicles (4) comprising
- a pilot pump (8) equipped with a manual actuation means (12), a lever and/or pedal, which is fluidically connected, through a first hydraulic conduit (16), to a sorbing device (20) that simulates the actuation resistance offered by a hydraulically operated braking device (24), wherein along said first hydraulic conduit (16) is arranged a first shut-off valve (28),
- a second hydraulic conduit (32) operatively connected to at least one braking device (24) associated with a wheel of said vehicle, said second hydraulic conduit (32) being connected to the first hydraulic conduit (16) through a second shut-off valve (36),
- the system (4) comprising a processing and control unit (40) operatively connected to the pilot pump (8) and motor means (44) for actuating said at least one braking device (24), the processing and control unit (40) being programmed so as to actuate the braking device (24) via the motor means (44) as a function of the actuation of the pilot pump (8) through the manual actuation means (12), in a "by-wire" operating condition,
- in said "by-wire" operating condition, the first shut-off valve (28) being selectively opened and the second shut-off valve (36) being closed,
wherein
the processing and control unit (40) is programmed to oversee the operation of the braking system (4) so as to correct the braking action requested by the user via the manual actuation means (12), by actuating the motors means (44) so as to avoid the locking of one or more wheels or the onset of instability of the vehicle during braking,
said processing and control unit (40) being programmed to induce on the manual actuation means (12) at least a vibration when it corrects the braking action requested by the user,
**characterised in that**
the system (4) comprises movable mechanical means (52), arranged between the manual actuation means (12) and the pilot pump (8), said movable mechanical means (52) being operatively connected to the processing and control unit (40) that is programmed so as to induce vibrations on the manual actuation means (12) by actuating the movable mechanical means (52), during the correction of the braking action requested by the user,
wherein the movable mechanical means (52) are vibrating mechanical means that comprise a piezoelectric device.

2. Braking system for vehicles (4) according to claim 1, wherein the movable mechanical means (52) comprise a rotary electric motor (56) provided with eccentric mass with respect to a rotation axis of the motor.

3. Braking system for vehicles (4) according to claim 1 or 2, wherein the movable mechanical means (52) comprise an electric motor with related translating mass (60).

4. Braking system for vehicles (4) according to any one of previous claims, wherein said piezoelectric device is associated to a relative mass.

5. Braking system for vehicles (4) according to any of claims 1 to 4, wherein, during the correction of the braking action requested by the user, the processing and control unit (40) is programmed to close the first shut-off valve (28) and to actuate the movable mechanical means (52).

6. Braking system for vehicles (4) according to any of claims 1 to 4, wherein, during the correction of the braking action requested by the user, the processing and control unit (40) is programmed to open the first shut-off valve (28) and to actuate the movable mechanical means (52).

7. Braking system for vehicles (4) according to any of claims 1 to 6, wherein, during the correction of the braking action requested by the user, the processing and control unit (40) is programmed to alternately open and close the first shut-off valve (28) and to actuate the movable mechanical means (52).

8. Braking system for vehicles (4) according to any of the preceding claims, wherein the said braking devices (24) comprise a disc, drum or shoe brake.

9. Braking system for vehicles (4) according to any of the preceding claims, wherein the processing and control unit (40) is programmed so that, in a power failure condition in which the motor means (44) malfunction, for the actuation of said at least one braking device (24), it commands the closing of the first shut-off valve (28) and the opening the second shut-off valve (36) so as to allow the direct hydraulic actuation of the braking devices (24) by means of the pilot pump (8).

10. Actuation method of a braking system (4) for vehicles comprising the steps of
- providing a pilot pump (8) equipped with a manual actuation means (12), a lever and/or pedal, which is fluidically connected, through a first hydraulic conduit (16), to a sorbing device (20) that simulates the actuation resistance offered by a hydraulically operated braking device (24), wherein along said first hydraulic conduit (16) is arranged a first shut-off valve (28),
- providing a second hydraulic conduit (32) operatively connected to at least one braking device (24) associated with a wheel of said vehicle, said second hydraulic conduit (32) being connected to the first hydraulic conduit (16) through a second shut-off valve (36),
- providing a processing and control unit (40) operatively connected to the pilot pump (8) and to motor means (44) for actuating said at least one braking device (24) as a function of the actuation of the pilot pump (8) through the manual actuation means (12), in a "by-wire" operating condition, in said "by-wire" operating condition the first shut-off valve (28) being selectively open and the second shut-off valve (36) being closed,
- correcting the braking action requested by the user via the manual actuation means (12), by means of the processing and control unit (40) which actuates the motor means (44) so as to avoid locking of one or more wheels or the onset of instability of the vehicle during braking,
- inducing on the manual actuation means (12) at least a vibration when the processing and control unit (40) corrects the braking action requested by the user,
- wherein the movable mechanical means (52) are vibrating mechanical means that comprise a piezoelectric device.

11. Method of actuating and controlling a braking system (4) comprising the step of controlling the operation of a braking system (4) for vehicles according to any of claims 1 to 9.

## Patentansprüche

1. Bremssystem für Fahrzeuge (4), umfassend:
- eine Pilotpumpe (8), welche mit einem manuellen Betätigungsmittel (12), einem Hebel und/oder Pedal, ausgerüstet ist, welche fluidisch durch einen ersten Hydraulikkreis (16) mit einer Sorbiervorrichtung (20) verbunden ist, welche den Betätigungswiderstand simuliert, welcher von einer hydraulisch betriebenen Bremsvorrichtung (24) geleistet wird, wobei entlang des ersten Hydraulikkreises (16) ein erstes Abschaltventil (28) angeordnet ist,
- einen zweiten Hydraulikkreis (32), welcher betriebsmäßig mit wenigstens einer Bremsvorrichtung (24) verbunden ist, welche einem Rad des Fahrzeugs zugeordnet ist, wobei der zweite Hydraulikkreis (32) mit dem ersten Hydraulikkreis (16) durch ein zweites Abschaltventil (36) verbunden ist,
- wobei das System (4) eine Verarbeitungs- und Steuereinheit (40) umfasst, welche betriebsmäßig mit der Pilotpumpe (8) und Motormitteln (44) zum Betätigen der wenigstens einen Bremsvorrichtung (24) verbunden ist, wobei die Verarbeitungs- und Steuereinheit (40) derart programmiert ist, dass sie die Bremsvorrichtung (24) mittels der Motormittel (44) als eine Funktion der Betätigung der Pilotpumpe (8) durch das manuelle Betätigungsmittel (12) in einem "By-Wire"-Betriebszustand betätigt,
- wobei in dem "By-Wire"-Betriebszustand das erste Abschaltventil (28) selektiv geöffnet ist und das zweite Abschaltventil (36) geschlossen ist, wobei
die Verarbeitungs- und Steuereinheit (40) dazu programmiert ist, den Betrieb des Bremssystems (4) zu überwachen, um so die Bremswirkung zu korrigieren, welche von dem Benutzer über das manuelle Betätigungsmittel (12) angefordert wird, indem die Motormittel (44) so betätigt werden, dass das Blockieren von einem oder mehreren Rädern oder das Einsetzen einer Instabilität des Fahrzeugs während eines Bremsens verhindert wird,
wobei die Verarbeitungs- und Steuereinheit (40) dazu programmiert ist, auf das manuelle Betätigungsmittel (12) wenigstens eine Vibration einzuwirken, wenn sie die von dem Benutzer angeforderte Bremswirkung korrigiert, **dadurch gekennzeichnet, dass**:
das System (4) bewegbare mechanische Mittel (52) umfasst, welche zwischen dem manuellen Betätigungsmittel (12) und der Pilotpumpe (8) angeordnet sind, wobei die bewegbaren mechanischen Mittel (52) betriebsmäßig mit der Verarbeitungs- und Steuereinheit (40) verbunden sind,
welche so programmierbar ist, dass Vibrationen auf das manuelle Betätigungsmittel (12) eingewirkt werden, indem die bewegbaren mechanischen Mittel (52) während des Korrigierens der von dem Benutzer angeforderten Bremswirkung betätigt werden,
wobei die bewegbaren mechanischen Mittel (52) vibrierende mechanische Mittel sind, welche eine piezoelektrische Vorrichtung umfassen.

2. Bremssystem für Fahrzeuge (4) nach Anspruch 1, wobei die bewegbaren mechanischen Mittel (52) einen Rotations-Elektromotor (56) umfassen, welcher mit einer exzentrischen Masse bezüglich einer Rotationsachse des Motors bereitgestellt ist.

3. Bremssystem für Fahrzeuge (4) nach Anspruch 1 oder 2, wobei die bewegbaren mechanischen Mittel (52) einen Elektromotor mit zugehöroger sich verlagernder Masse (60) umfassen.

4. Bremssystem für Fahrzeuge (4) nach einem der vorhergehenden Ansprüche, wobei die piezoelektrische Vorrichtung einer relativen Masse zugeordnet ist.

5. Bremssystem für Fahrzeuge (4) nach einem der Ansprüche 1 bis 4, wobei während des Korrigierens der von dem Benutzer angeforderten Bremswirkung die Verarbeitungs- und Steuereinheit (40) dazu programmiert ist, das erste Abschaltventil (28) zu schließen und die bewegbaren mechanischen Mittel (52) zu betätigen.

6. Bremssystem für Fahrzeuge (4) nach einem der Ansprüche 1 bis 4, wobei während eines Korrigierens der von dem Benutzer angeforderten Bremswirkung die Verarbeitungs- und Steuereinheit (40) dazu programmiert ist, das erste Abschaltventil (28) zu öffnen und die bewegbaren mechanischen Mittel (52) zu betätigen.

7. Bremssystem für Fahrzeuge (4) nach einem der Ansprüche 1 bis 6, wobei während eines Korrigierens der von dem Benutzer angeforderten Bremswirkung die Verarbeitungs- und Steuereinheit (40) dazu programmiert ist, das erste Abschaltventil (28) alternativ zu öffnen und schließen und die bewegbaren mechanischen Mittel (52) zu betätigen.

8. Bremssystem für Fahrzeuge (4) nach einem der vorhergehenden Ansprüche, wobei die Bremsvorrichtungen (24) eine Scheiben-, Trommel- oder Backenbremse umfassen.

9. Bremssystem für Fahrzeuge (4) nach einem der vorhergehenden Ansprüche, wobei die Verarbeitungs- und Steuereinheit (40) so programmiert ist, dass sie in einem Stromausfallzustand, in welchem die Motormittel (44) eine Fehlfunktion aufweisen, für die Betätigung der wenigstens einen Bremsvorrichtung (24) das Schließen des ersten Abschaltventils (28) und das Öffnen des zweiten Abschaltventils (36) anweist, um so die direkte hydraulische Betätigung der Bremsvorrichtungen (24) mittels der Pilotpumpe (8) zu erlauben.

10. Betätigungsverfahren eines Bremssystems (4) für Fahrzeuge, umfassend die Schritte:
- Bereitstellen einer Pilotpumpe (8), welche mit einem manuellen Betätigungsmittel (12), einem Hebel und/oder einem Pedal, ausgerüstet ist, welche fluidisch durch einen ersten Hydraulikkreis (16) mit einer Sorbiervorrichtung (20) verbunden ist, welche den Betätigungswiderstand simuliert, welcher von einer hydraulisch betriebenen Bremsvorrichtung (24) geleistet wird, wobei entlang des ersten Hydraulikkreises (16) ein erstes Abschaltventil (28) angeordnet ist,
- Bereitstellen eines zweiten Hydraulikkreises (32), welcher betriebsmäßig mit wenigstens einer Bremsvorrichtung (24) verbunden ist, welche einem Rad des Fahrzeugs zugeordnet ist, wobei der zweite Hydraulikkreis (32) mit dem ersten Hydraulikkreis (16) durch ein zweites Abschaltventil (36) verbunden ist,
- Bereitstellen einer Verarbeitungs- und Steuereinheit (40) umfasst, welche betriebsmäßig mit der Pilotpumpe (8) und Motormitteln (44) zum Betätigen der wenigstens einen Bremsvorrichtung (24) als eine Funktion der Betätigung der Pilotpumpe (8) durch das manuelle Betätigungsmittel (12) in einem "By-Wire"-Betriebszustand verbunden ist, wobei in dem "By-Wire"-Betriebszustand das erste Abschaltventil (28) selektiv offen und das zweite Abschaltventil (36) beschlossen ist,
- Korrigieren der von dem Benutzer über das manuelle Betätigungsmittel (12) angeforderten Bremswirkung mittels der Verarbeitungs- und Steuereinheit (40), welche die Motormittel (44) so betätigt, dass ein Blockieren von einem oder mehreren Rädern oder das Einsetzen einer Instabilität des Fahrzeugs während eines Bremsens verhindert wird,
- Einwirken wenigstens einer Vibration auf das manuelle Betätigungsmittel (12), wenn die Verarbeitungs- und Steuereinheit (40) die von dem Benutzer angeforderte Bremswirkung korrigiert,
- wobei die bewegbaren mechanischen Mittel (52) vibrierende mechanische Mittel sind, welche eine piezoelektrische Vorrichtung umfassen.

11. Verfahren zum Betätigen und Steuern eines Bremssystems (4), welches den Schritt eines Steuerns des Betriebs eines Bremssystems (4) für Fahrzeuge nach einem der Schritte 1 bis 9 umfasst.

## Revendications

1. Système de freinage pour véhicules (4) comprenant
- une pompe pilote (8) équipée d'un moyen d'actionnement manuel (12), un levier et/ou une pédale qui est en communication fluidique, par l'intermédiaire d'une première conduite hydraulique (16), avec un dispositif absorbeur (20) qui simule la résistance d'actionnement présentée par un dispositif de freinage à commande hydraulique (24), dans lequel le long de ladite première conduite hydraulique (16) est agencée une première vanne d'arrêt (28),
- une deuxième conduite hydraulique (32) raccordée de manière fonctionnelle à au moins un dispositif de freinage (24) associé à une roue dudit véhicule, ladite deuxième conduite hydraulique (32) étant raccordée à la première conduite hydraulique (16) par l'intermédiaire d'une deuxième vanne d'arrêt (36),
- le système (4) comprenant une unité de traitement et de commande (40) raccordée de manière fonctionnelle à la pompe pilote (8) et à des moyens moteurs (44) pour actionner ledit au moins un dispositif de freinage (24), l'unité de traitement et de commande (40) étant programmée de façon à actionner le dispositif de freinage (24) via les moyens moteurs (44) en fonction de l'actionnement de la pompe pilote (8) par l'intermédiaire du moyen d'actionnement manuel (12), dans un mode de fonctionnement « filaire »,
- dans ledit mode de fonctionnement « filaire », la première vanne d'arrêt (28) est sélectivement ouverte et la deuxième vanne d'arrêt (36) est fermée,
dans lequel
l'unité de traitement et de commande (40) est programmée pour surveiller le fonctionnement du système de freinage (4) afin de corriger l'action de freinage demandée par l'utilisateur via le moyen d'actionnement manuel (12), en actionnant les moyens moteurs (44) de façon à éviter le blocage d'une ou de plusieurs roues ou la survenue d'une instabilité du véhicule durant le freinage,
ladite unité de traitement et de commande (40) étant programmée pour provoquer au moins une vibration sur le moyen d'actionnement manuel (12) lorsqu'elle corrige l'action de freinage demandée par l'utilisateur,
**caractérisé en ce que**
le système (4) comprend des moyens mécaniques mobiles (52), agencés entre le moyen d'actionnement manuel (12) et la pompe pilote (8), lesdits moyens mécaniques mobiles (52) étant raccordés de manière fonctionnelle à l'unité de traitement et de commande (40) qui est programmée pour provoquer des vibrations sur le moyen d'actionnement manuel (12) en actionnant les moyens mécaniques mobiles (52), durant la correction de l'action de freinage demandée par l'utilisateur,
dans lequel les moyens mécaniques mobiles (52) sont des moyens mécaniques vibrants qui comprennent un dispositif piézoélectrique.

2. Système de freinage pour véhicules (4) selon la revendication 1, dans lequel les moyens mécaniques mobiles (52) comprennent un moteur électrique rotatif (56) pourvu d'une masse excentrée par rapport à un axe de rotation du moteur.

3. Système de freinage pour véhicules (4) selon la revendication 1 ou 2, dans lequel les moyens mécaniques mobiles (52) comprennent un moteur électrique avec une masse de translation associée (60).

4. Système de freinage pour véhicules (4) selon l'une quelconque des revendications précédentes, dans lequel ledit dispositif piézoélectrique est associé à une masse relative.

5. Système de freinage pour véhicules (4) selon l'une quelconque des revendications 1 à 4, dans lequel, durant la correction de l'action de freinage demandée par l'utilisateur, l'unité de traitement et de commande (40) est programmée pour fermer la première vanne d'arrêt (28) et pour actionner les moyens mécaniques mobiles (52).

6. Système de freinage pour véhicules (4) selon l'une quelconque des revendications 1 à 4, dans lequel, durant la correction de l'action de freinage demandée par l'utilisateur, l'unité de traitement et de commande (40) est programmée pour ouvrir la première vanne d'arrêt (28) et pour actionner les moyens mécaniques mobiles (52).

7. Système de freinage pour véhicules (4) selon l'une quelconque des revendications 1 à 6, dans lequel, durant la correction de l'action de freinage demandée par l'utilisateur, l'unité de traitement et de commande (40) est programmée pour ouvrir et fermer alternativement la première vanne d'arrêt (28) et pour actionner les moyens mécaniques mobiles (52).

8. Système de freinage pour véhicules (4) selon l'une quelconque des revendications précédentes, dans lequel lesdits dispositifs de freinage (24) comprennent un frein à mâchoires, à disque, ou à tambour.

9. Système de freinage pour véhicules (4) selon l'une quelconque des revendications précédentes, dans lequel l'unité de traitement et de commande (40) est programmée de sorte qu'en cas de panne d'alimentation électrique au cours de laquelle les moyens moteurs (44) dysfonctionnent, et en vue de l'actionnement dudit au moins un dispositif de freinage (24), elle commande la fermeture de la première vanne d'arrêt (28) et l'ouverture de la deuxième vanne d'arrêt (36) de façon à permettre l'actionnement hydraulique direct des dispositifs de freinage (24) au moyen de la pompe pilote (8).

10. Procédé d'actionnement d'un système de freinage (4) pour véhicules comprenant les étapes consistant à :
- fournir une pompe pilote (8) équipée d'un moyen d'actionnement manuel (12), un levier et/ou une pédale, qui est en communication fluidique, par l'intermédiaire d'une première conduite hydraulique (16), avec un dispositif absorbeur (20) qui simule la résistance d'actionnement présentée par un dispositif de freinage à commande hydraulique (24), dans lequel le long de ladite première conduite hydraulique (16) est agencée une première vanne d'arrêt (28),
- fournir une deuxième conduite hydraulique (32) raccordée de manière fonctionnelle à au moins un dispositif de freinage (24) associé à une roue dudit véhicule, ladite deuxième conduite hydraulique (32) étant raccordée à la première conduite hydraulique (16) par l'intermédiaire d'une deuxième vanne d'arrêt (36),
- fournir une unité de traitement et de commande (40) raccordée de manière fonctionnelle à la pompe pilote (8) et à des moyens moteurs (44) pour actionner ledit au moins un dispositif de freinage (24) en fonction de l'actionnement de la pompe pilote (8) par l'intermédiaire du moyen d'actionnement manuel (12), dans un mode de fonctionnement « filaire » ; dans ledit mode de fonctionnement « filaire » la première vanne d'arrêt (28) est ouverte de manière sélective et la deuxième vanne d'arrêt (36) est fermée,
- corriger l'action de freinage demandée par l'utilisateur via le moyen d'actionnement manuel (12), au moyen de l'unité de traitement et de commande (40) qui actionne les moyens moteurs (44) afin d'éviter le blocage d'une ou de plusieurs roues ou la survenue d'une instabilité du véhicule durant le freinage,
- provoquer au moins une vibration sur le moyen d'actionnement manuel (12) lorsque l'unité de traitement et de commande (40) corrige l'action de freinage demandée par l'utilisateur,
- dans lequel les moyens mécaniques mobiles (52) sont des moyens mécaniques vibrants qui comprennent un dispositif piézoélectrique.

11. Procédé d'actionnement et de commande d'un système de freinage (4) comprenant l'étape consistant à contrôler le fonctionnement d'un système de freinage (4) pour véhicules selon l'une quelconque des revendications 1 à 9.
